# EUROPEAN PATENT APPLICATION

(11) **EP 0 691 566 A1**
(43) Date of publication of application: **10.01.1996**
(21) Application number: 95304653.9
(22) Date of filing: 03.07.1995
(51) Int. Cl.: G03B 17/52

(54) **Method and apparatus for minimizing specks on positive film sheets**

(30) Priority: 06.07.1994 US 271360
(71) Applicant: POLAROID CORPORATION, Cambridge, Massachusetts 02139 (US)
(72) Inventor: Slavitter, Frederick, Needham, MA 02194 (US)
(74) Representative: Skone James, Robert Edmund

(57) **Abstract**

White specks or artifacts often found in photographs produced by instant or self-developing type film are eliminated or greatly minimized by adjusting the speed of the spread rollers (18,20) bursting the pod (16) of developer fluid employed in such film, before spreading it between the positive and negative sheets of a photographic film unit. A slower speed is used at the beginning of the process until the processing liquid has had an opportunity to spread, transversely, more uniformly across the film unit and thereafter, the speed is accelerated to speed up the liquid spreading process.

## Description

This invention relates to spread rollers used in the processing of self-developing film for rupturing a pod of processing liquid and spreading it between a positive and a negative film sheet of a self-developing film unit to provide a visible image on the positive film sheet.

Photographs of the instant or self-developing type are processed in two ways. One way is where the positive and negative film sheets are combined in juxtaposed position with an associated pod of processing or developer liquid. All three essential elements are incorporated within a camera where exposure and processing take place. US-A-3,607,285 is a typical example of a camera employing such a film processing arrangement. The second way is where a previously exposed negative film sheet is combined or mated with a positive film sheet having a pod of developer liquid attached at its forward end. After the units are aligned properly the processing takes place by rupture of the pod and a subsequent series of conventional steps.

In both cases, the combined positive and negative film sheets are passed through the bite of a pair of juxtaposed rollers which squeeze and rupture a pod of processing liquid to spread it between the two film sheets. The processing liquid causes the formation of a visible image on the positive sheet by a well-known diffusion transfer process, while within some type of imbibition or light tight chamber. Thereafter the negative and excess processing liquid are separated or peeled from the positive sheet and discarded.

A problem which has arisen, as a result of the aforementioned processing, is white specks on the positive film sheet after developing which usually appear most closely to the edge of the photograph nearest to the location of the pod of processing liquid. It is believed that the white specks, usually referred to as artifacts, occur because of air bubbles entrained in the liquid as a result of turbulent flow, at the site of the rupture of the pod, at the beginning of the entry of the pod into the bite of the spread rollers. It is believed that the pod does not rupture uniformly transversely across the film unit and as a result, the initial pod rupture and immediate spewing of the processing liquid therefrom is quite turbulent at the time the pod bursts thereby causing small air bubbles to be entrained from the atmosphere. As the spread rollers continue to advance to spread the developer liquid, some of the bubbles pass through the bite of the rollers and the entrained air bubbles separate the processing liquid from contact with the positive film sheet. The result is that the positive film sheet is without contact with developer liquid at the bubble site and therefore no visible image is formed in the area adjacent the bubble site.

In accordance with one aspect of the present invention, apparatus for minimizing specks on positive film sheets of a self-developing film unit comprises a pair of juxtaposed spread rollers configured to receive therebetween a composite film unit comprising a negative film sheet, a positive film sheet and a pod of processing liquid, said pod being located on the forward end of said composite film unit remote from a trailing end; and a motor for rotating at least one of said rollers to pull said film sheets and pod between said rollers, rupture said pod and spread said liquid between said film sheets and is characterised in that the apparatus further comprises a controller for controlling the speed of rotation of said one roller to have at least two different speeds with said pod and film sheets between said rollers.

In accordance with a second aspect of the present invention, a method for minimizing specks on developed film units comprises delivering a pod of developer fluid, a positive film sheet and a negative film sheet to the bite of juxtaposed rollers; rotating said rollers to rupture said pod, pull said units between said rollers and spread said liquid between said film sheets; controlling the speed of rotation of said rollers at a first speed while said pod is within said bite; and after said pod exits said bite, accelerating said rollers to a second speed.

As a result of the just-mentioned problem and the analysis of the reasons for the artifacts, a system and method have been designed to solve this problem. The system incorporates a controller to adjust the speed of the spread rollers such that the spread rollers typically rotate at a slower speed during the time the pod of developer or processing liquid is within the bite of the rollers. Thereby, the pressure build-up to burst the pod is slower and after the pod bursts, the slow-moving rollers allow the processing liquid to spread more uniformly across the film unit. Any entrained air bubbles are propelled along smoothly without being captured by the advancing spread rollers because of the slower-moving spread rollers. While the pod is within the bite of the spread rollers, any froth resulting from the initial pod burst is propelled longitudinally along the film unit and is ultimately captured in a trap at the trailing end of the film unit where it will not create the unsightly artifacts. Indeed, with the slower initial speed of the rollers, fewer bubbles are created at the initial pod bursting.

During the course of experiments, it has been determined that after the pod portion of the film unit exits the bite area of the rotating spread rollers, the controller may accelerate the speed of the spread rollers without any detrimental effect. With the accelerated speed, the developing process is accelerated to the benefit of the amateur photographer or the professional developer where large-sheet photography is important.

US-A-4,855,769 discloses at column 8, lines 52-62, that a computer program may be incorporated into a camera back to control spread roller speed based upon machine readable indicia on the film package. There is no indication of any reasons for two speeds with each film unit. Indeed, the invention disclosed herein may be advantageously combined with the structure of this earlier patent.

In the broadest sense, drive rollers operating at two speeds on one film unit could include rollers which move at the same speed in both forward and reverse directions. Two examples of that are in US-A-4,814,801 and US-A-5,218,391. Neither of these patents recognise the problem or the solution as described subsequently.

Objects of the invention not understood from the above will become clear from a review of the drawings and the description of the preferred embodiment which follows.
Figure 1 is a fragmentary elevational view of a conventional self-developing film unit about to enter the spread rollers of a camera processing system powered by a motor having a controller associated therewith; and,
Figure 2 is a block diagram of the procedural steps of an example of this invention.

A problem exists in the development process of instant photography which is not a problem in more traditional development systems. The problem is the appearance of occasional white specks or artifacts in the photograph. Such artifacts seem to occur where air bubbles become entrained in the processing liquid as it is spread between the positive and the negative film sheets of a self-developing photographic film unit. Minute bubbles separate a small portion of the positive film sheet from full contact with developer liquid squeezed from a pod and then between the positive and negative film sheets.

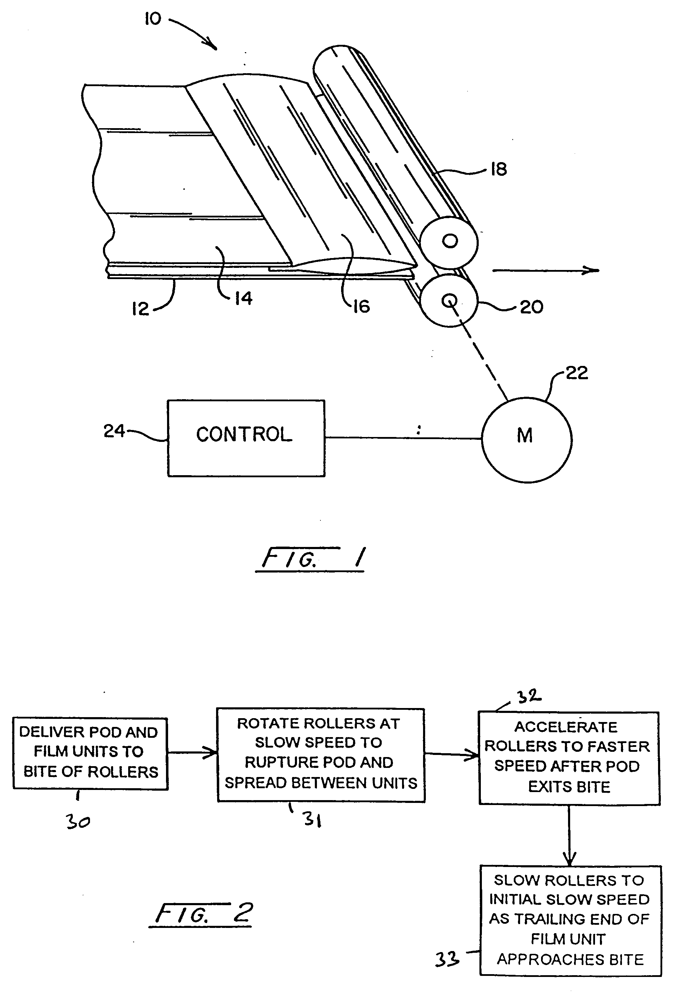

Looking to Fig.1, in conventional self-developing-type film processing, a composite film unit 10 includes a plurality of layers which may be characterized as a negative film sheet 12, a positive film sheet 14, and a pod 16 of developer or processing liquid.

In consumer-type cameras having composite self-developing photographic film units 10 stacked therein, as is conventional with cameras and film manufactured by the Polaroid Corporation of Cambridge, Massachusetts, the composite sandwich is supplied as one in a stack of film units from a cassette within the camera, which is exposed and subsequently processed in a conventional fashion.

Large-format film may not use this exact technique. It may be that the negative sheet 12 is exposed in a camera, then transported in light-tight enclosure to a developing apparatus where it is mated with a positive film sheet 14. An associated pod of developer liquid 16 may be included with the positive film sheet 14. The exact mechanism for mating the positive and negative film sheets and their structural association with the pod 16 is not of significance to this invention except that the pods be located at the forward end of the mated or composite film units as they enter the bite of spread rollers 18, 20.

After exposure of the negative 12, it is conventional to advance the composite film unit 10 through a pair of juxtaposed spread rollers 18, 20. At least one spread roller 20 is driven by an electrically powered motor 22. What is different about this invention from conventional spread rollers is that the motor 22 is operated at two different speeds while the film unit 10 is passing through the bite of the spread rollers. The speed of rotation of the spread rollers is controlled by a controller 24 connected to the motor 22.

To eliminate or minimize the aforementioned artifacts, a new or improved process has been developed. An exposed composite self-developing film unit 10 is advanced (step 30, Figure 2) to the bite of spread rollers 18 and 20, at which point a switch or sensor (not shown) activates the motor 22 to drive spread rollers 18 and 20 and pull the pod 16 and sheets 12,14 through the rollers 18,20. Controller 24 activates motor 22 at a slow or reduced speed of about 3-5 inches (7.5-12.5cm) per second to slowly draw pod 16 into the bite thereof where the build-up of pressure bursts the pod and the processing liquid spreads between sheets 12 and 14 where it is intended to perform its developing function in the well-known diffusion transfer process (step 31).

The slower-moving rollers 18,20 expel the liquid between sheets 12 and 14 at a relatively slow rate to allow transverse spreading of the liquid and minimize or eliminate any entrapment of air bubbles as a result of turbulent initial flow of liquid from the first fracture or rupture of a trailing end of the pod 16. The slow-moving pace of the rollers makes the transverse spread much more uniform than conventional systems. Conventional spread roller operation has a faster pace which is uniform in speed from the time the pod 16 enters the spread roller bite to the time the trailing end of the film unit 10 is expelled from the rollers.

After the liquid is essentially all expelled from pod 16 into the space between sheets 12 and 14 of the film unit 10, controller 24 adjusts the speed of motor 22 up to about 8 inches (20cm) per second to accelerate the process without any detrimental effects (step 32). Any excess fluid and any bubbles which may have occurred in the rupture of pod 16 are slowly expelled from between sheets 12 and 14 to be absorbed in a paper repository or liquid trap (not shown) at the trailing end of film unit 10. The apparatus for absorbing excess developer or processing liquid is well-known in the art and need not be described herein.

Controller 24 may also be programmed to slow the speed of rotation of rollers 18,20 as the trailing end of composite film unit 10 approaches the bite thereof (step 33). Slowing to about the initial 3-5 inches (7.5-12.5cm) per second at the end of liquid spread allows time for the conventional trailing paper trap (not shown) forming a part of the film unit 10 to absorb excess developer liquid and prevent any inadvertent expulsion of liquid from the film unit which could collect on the rollers 18,20.

## Claims

1. Apparatus for minimizing specks on positive film sheets of a self-developing film unit comprising:
a pair of juxtaposed spread rollers (18,20) configured to receive therebetween a composite film unit comprising a negative film sheet (12), a positive film sheet (14) and a pod (16) of processing liquid, said pod being located on the forward end of said composite film unit remote from a trailing end; and
a motor (22) for rotating at least one of said rollers (12,14) to pull said film sheets and pod between said rollers, rupture said pod and spread said liquid between said film sheets, characterised in that the apparatus further comprises a controller (24) for controlling the speed of rotation of said one roller to have at least two different speeds with said pod and film sheets between said rollers.

2. The apparatus of claim 1, wherein one said speed is slower where said pod is between said rollers.

3. The apparatus of claim 2, wherein said controller (24) controls the speed of rotation of said one roller at a slow speed both when said pod and said trailing end are between the rollers.

4. The apparatus of any of claims 1 to 3, wherein said controller (24) and motor (22) in combination rotate said one roller (20) to produce a composite film unit speed of about 3-5 inches (7.5-12.5cm) per second while said pod (16) is between said rollers, and after said pod exits said rollers said combination accelerates said one roller to produce a composite film unit speed of up to about 8 inches (20cm) per second.

5. The apparatus of claim 4, wherein said controller slows said one roller speed of rotation when said trailing end is between said rollers.

6. A process for minimizing specks on developed film units comprising:
delivering a pod (16) of developer fluid, a positive film sheet (14) and a negative film sheet (12) to the bite of juxtaposed rollers (18,20);
rotating said rollers (18,20) to rupture said pod (16), pull said units between said rollers and spread said liquid between said film sheets;
controlling the speed of rotation of said rollers at a first speed while said pod (16) is within said bite; and
after said pod exits said bite, accelerating said rollers to a second speed.

7. The process of claim 6, wherein said first speed, while said pod is in said bite, produces a film unit speed of about 3-5 inches (7.5-12.5cm) per second.

8. The process or claim 6 or claim 7, wherein said second speed produces a film sheet unit speed of up to about 8 inches (20cm) per second.

9. The process of any of claims 6 to 8, wherein said film units include a trailing end, the method further comprising controlling the speed of rotation of said rollers as said trailing end approaches said rollers by reducing said roller speed.
